# EUROPÄISCHE PATENTSCHRIFT

(11) **EP 0 909 672 B1**
(45) Veröffentlichungstag und Bekanntmachung des Hinweises auf die Patenterteilung: **30.05.2001**
(21) Anmeldenummer: 98112625.3
(22) Anmeldetag: 08.07.1998
(51) Int. Cl.: B60K 37/04

(54) **Anordung eines Bauteils, insbesondere eines Bedienteils,auf einem Armaturenbrett eines Kraftfahrzeuges**
Arrangement of a component, particularly of a control unit, on a dashboard of a motor vehicle
Agencement d'un élément en particulier d'un ensemble de commande sur le tableau de bord d'une automobile

(30) Priorität: 15.10.1997 DE 19745473
(43) Veröffentlichungstag der Anmeldung: 21.04.1999
(73) Patentinhaber: Preh-Werke GmbH & Co. KG, 97616 Bad Neustadt a.d. Saale (DE)
(72) Erfinder: Bauer, Karl-Heinz, 97616 Bad Neustadt (DE); Voll, Walter, 97657 Sandberg (DE)
(74) Vertreter: Dietrich, Barbara

(56) Entgegenhaltungen:
- DE-A- 4 326 910
- FR-A- 2 720 125
- US-A- 5 639 140

## Beschreibung

Die Erfindung betrifft ein Bauteil, insbesondere ein Bedienteil, die oberbegriffsmäßige auf einem Armaturenbrett eines Kraftfahrzeuges nach dem Oberbegriff des Anspruchs 1.

Derartige Bauteile, hier handelt es sich z. B. um Autoradios oder Bedienteile für Heizungs- und Klimaanlagen, werden durch Schraub- oder Klammerbefestigungen (DE 16 30 874 A1, und Blende, zur Befestigung DE 43 26 910 A1), gehalten, deren Montage und Demontage zeitraubend und umständlich ist.

Aus der DE 66 07 987 U1 ist bereits eine Anordnung einer Baueinheit an einem Armaturenbrett bekannt, bei der ein Ring mittels federnder Wandabschnitte und eines Anschlages in einer Öffnung des Armaturenbretts gehalten ist, in den die Baueinheit eingeschoben wird. Bei dieser Anordnung besteht der Nachteil, daß eine Montage nur in einer Einschubrichtung, d. h. nur von vorne möglich ist.

Darüber hinaus erfordern diese Befestigungen geringe Toleranzen der Bauteile- und Einschuböffnungen-Abmaße, die einer wirtschaftlichen Großserienfertigung entgegenstehen.

Hiervon ausgehend liegt der Erfindung daher die Aufgabe zugrunde, eine Anordnung zur Befestigung eines Bauteils derart zu gestalten, daß eine einfache Montage und Demontage, größere Toleranzen der Abmessungen und eine wirtschaftliche Großserienfertigung erreicht werden.

Diese Aufgabe ist durch die im Kennzeichen des Patentanspruchs 1 genannten Merkmale gelöst worden. Vorteilhafte Weiterbildungen sind mit den Unteransprüchen angegeben.

Ein Ausführungsbeispiel der Erfindung ist in der Zeichnung dargestellt und wird nachfolgend beschrieben.

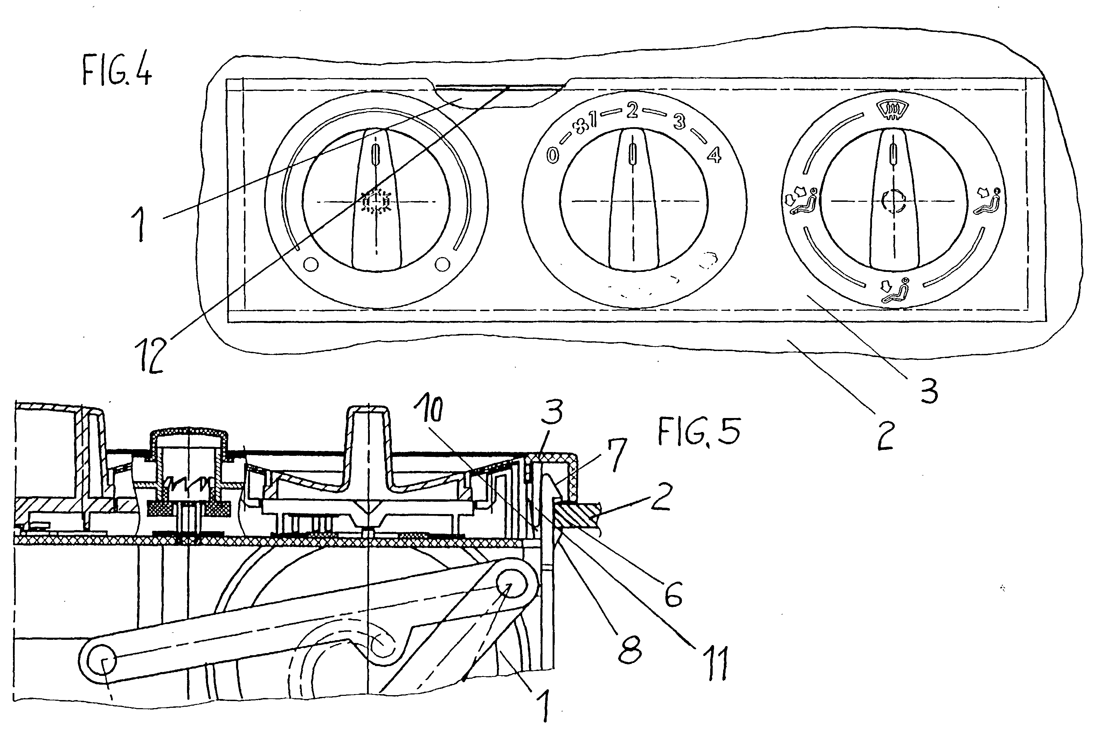

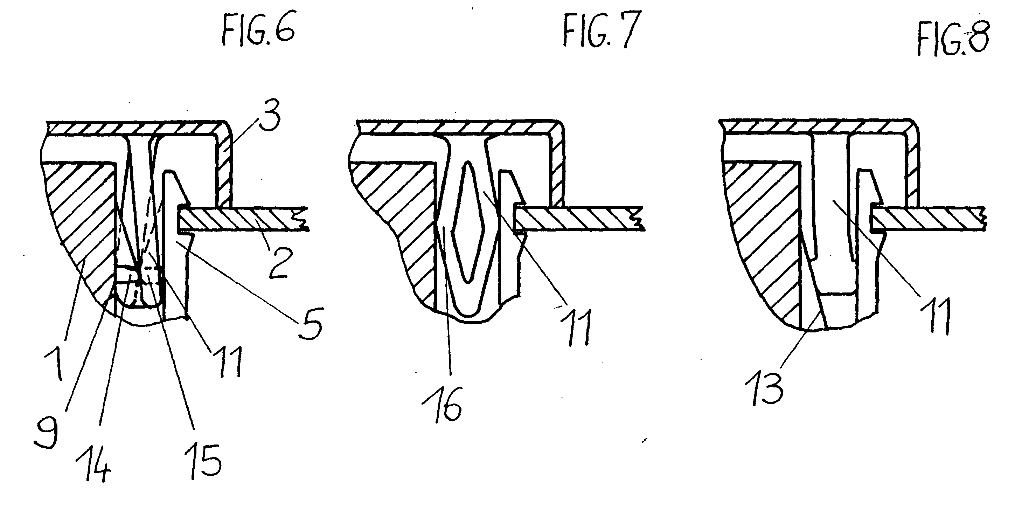

Diese zeigt:
**Fig. 1 - 3**
   Ansichten eines Bauteils,
**Fig. 4**
   eine Ansicht eines Bauteils am Armaturenbrett,
**Fig. 5**
   einen Mittelschnitt aus Fig. 4,
**Fig. 6 - 8**
   Vergrößerungen aus Fig. 5 mit alternativen Ausbildungen des Füllansatzes.

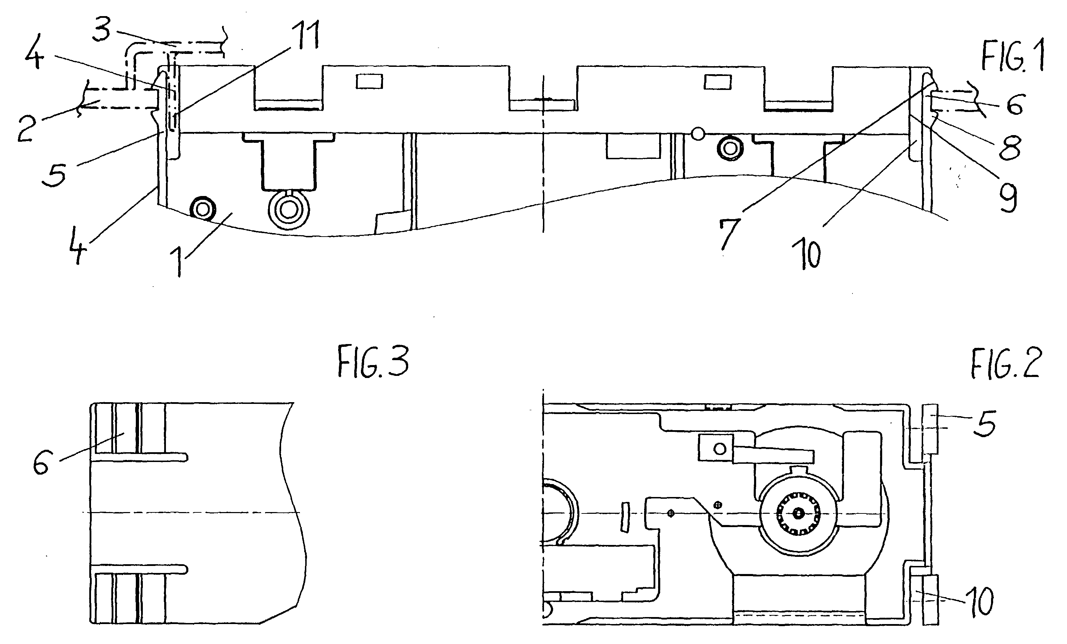

Fig. 1, 2 und 3 zeigen Ansichten eines Bauteils 1, hier handelt es sich um ein Bedienteil für die Heizungs-Klimaanlage-Bedienung, das in das Armaturenbrett 2 eines Kraftfahrzeuges eingesetzt werden soll. Das Bauteil 1 soll nach der Montage durch eine auf das Bauteil 1 aufgesetzte und verklippste Blende 3 (Fig. 4) eingerahmt und verblendet sein.

Erfindungsgemäß weist das Bauteil 1 an den in Einschubrichtung seitlichen Flächen 4 federnde Wandabschnitte 5 mit einer Aufnahmenut 6 für das Armaturenbrett 2 auf, die durch Rampen 7, 8 begrenzt ist, die beiderseits der Nut 6 in Einschubrichtung ansteigend und abfalllend ausgeführt sind. Zwischen den federnden Wandabschnitten 5 und dem Bauteilgehäuse 9 besteht ein Luftspalt 10, in den die federnden Wandabschnitte 5 beim Einschieben einfedern. Die Luftspalte 10 werden nach dem Einrasten des Armaturenbretts 2 in die Nuten 6 durch an der Blende 3 angeordnete Füllansätze 11 teilweise ausgefüllt.

Mit dieser Ausführung kann das Bauteil 1 von jeder Seite des Armaturenbretts 2 her in eine vorgesehene Öffnung 12 des Armaturenbretts 2, wie aus Fig. 4 ersichtlich ist, eingeschoben werden. Es werden keine Befestigungsmittel wie Schrauben oder Klammern benötigt.

Durch die Füllansätze 11 ist ein nochmaliges Einfedern der Wandabschnitte 5 in den Luftspalt 10 verhindert, d. h. die Verbindung des Bauteils 1 mit der Armaturenbrettwandung ist damit gesichert, wie aus Fig. 5, die einen Mittelschnitt der Fig. 4 zeigt, ersichtlich ist.

Es hat sich als vorteilhaft gezeigt, wenn die Füllansätze 11 beim Einschieben in den Luftspalt 10 elastisch verformt werden und so die Wandabschnitte 5 nach außen hin belasten.
Hierdurch ist ein Festsitz des Bauteils 1 innerhalb der Öffnung 12 erreicht worden.

Wie in den Fig. 6 bis 8 dargestellt, können die federnden Füllansätze 11 so ausgeführt werden, daß die Füllansätze 11 beim Einschieben von einer schiefen Ebene 13 nach außen geführt sind (Fig. 8) oder daß die Füllansätze 11 durch Erhöhungen 15 und 14 der inneren Wandung der Wandabschnitte 5 und des Bauteilgehäuses 9 nach innen und außen geführt sind (Fig. 6) bzw. die Füllansätze 11 gespreizte, gabelförmige Abschnitte 16 aufweisen, die beim Einschieben zusammengedrückt werden (Fig. 7).

Mit der erfindungsgemäßen Anordnung ist eine vorteilhafte Montage des Bedienteils möglich geworden.

## Patentansprüche

1. Bauteil (1), insbesondere ein Bedienteil, mit Blende (3), zur Befestigung auf einem Armaturenbrett (2) eines Kraftfahrzeuges, wobei das Bauteil (1) an den in Einschubrichtung seitlichen Flächen (4) federnde Wandabschnittel (5) aufweist, die nach Befestigung im Armaturenbrett (2) durch die auf das Bauteil gesetzte Blende eingerahmt und verblendet wird, dadurch gekennzeichnet, daß die Wandabschnitte (5) eine Aufnahmenut (6) aufweisen, in die das Armaturenbrett (2) einrasten kann, daß die Aufnahmenut (6) durch Rampen (7, 8) begrenzt ist, die beiderseits der Aufnahmenut (6) in Einschubrichtung ansteigend und abfall end ausgeführt sind, daß zwischen den federnden Wandabschnitten (5) und dem Bauteilgehäuse (9) ein Luftspalt (10) besteht, in den die federnden Wandabschnitte (5) beim Einschieben einfedern, und daß die Luftspalte (10) nach Einrasten des Armaturenbretts (2) in die Aufnahmenuten (6) durch an der Blende (3) angeordnete Füllansätze (11) teilweise ausgefüllt werden.

2. Bauteil nach Anspruch 1, dadurch gekennzeichnet, daß die Füllansätze (11) beim Einschieben in den Luftspalt (10) elastisch verformt werden und die Wandabschnitte (5) nach außen belasten.

3. Bauteil nach Anspruch 2, dadurch gekennzeichnet, daß die Füllansätze (11) beim Einschieben von einer schiefen Ebene (13) nach außen geführt sind.

4. Bauteil nach Anspruch 2, dadurch gekennzeichnet, daß die Füllansätze (11) durch Erhöhungen (15 und 14) der inneren Wandung der Wandabschnitte (5) und des Bauteilgehäuses (9) nach innen und außen geführt sind.

5. Bauteil nach Anspruch 2, dadurch gekennzeichnet, daß die Füllansätze (11) gespreizte, gabelförmige Abschnitte (16) aufweisen, die beim Einschieben zusammengedrückt werden.

## Claims

1. Component (1), in particular an operating element with a cover (3), for securement on a dashboard (2) of a motor vehicle, with the component (1) having, on the faces (4) that are at the side in the direction of insertion, resilient wall sections (5) which after securement in the dashboard (2) are framed and faced by the cover that is set upon the component, characterised in that the wall sections (5) have a receiving groove (6) into which the dashboard (2) can engage, in that the receiving groove (6) is delimited by ramps (7, 8), which are designed so as to rise and fall on both sides of the receiving groove (6) in the direction of insertion, in that between the resilient wall sections (5) and the component housing (9) there is an air gap (10) into which the resilient wall sections (5) spring upon insertion, and in that after the dashboard (2) has been engaged in the receiving grooves (6) the air gaps (10) are partly filled in by filling extensions (11) that are arranged on the cover (3).

2. Component according to claim 1, characterised in that the filling extensions (11) are elastically deformed upon insertion into the air gap (10) and load the wall sections (5) outwardly.

3. Component according to claim 2, characterised in that upon insertion the filling extensions (11) are guided outwards by an inclined plane (13).

4. Component according to claim 2, characterised in that the filling extensions (11) are guided inwards and outwards by means of elevations (15 and 14) of the inner wall of the wall sections (5) and the component housing (9).

5. Component according to claim 2, characterised in that the filling extensions (11) have spread-out, forked sections (16) which are compressed upon insertion.

## Revendications

1. Pièce détachée (1), en particulier une pièce détachée avec un écran (3), destinée à être fixée sur un tableau de bord (2) d'un véhicule, moyennant quoi la pièce détachée (1) présente, au niveau des faces latérales (4) orientées dans la direction d'entrevous, des sections formant parois élastiques (5), qui est encadrée et revêtue de l'écran positionné sur la pièce détachée suite à la fixation de cette dernière dans le tableau de bord (2), caractérisée en ce que les sections formant parois (5) présentent une rainure de réception (6), dans laquelle le tableau de bord (2) peut s'enclencher, en ce que la rainure de réception (6) est délimitée par des rampes (7, 8), qui sont conçues des deux côtés de la rainure de réception (6) de façon à monter et tomber dans la direction d'entrevous, en ce qu'un espace d'air (10) se trouve entre les sections formant parois (5) élastiques et le bâti de la pièce détachée (9), espace dans lequel s'enfoncent les sections formant parois élastiques (5) lors de l'insertion, et en ce que les espaces d'air (10) sont partiellement remplis, suite à l'encliquetage du tableau de bord (2) dans les rainures de réception (6), grâce aux appendices (11) agencés sur l'écran (3).

2. Pièce détachée selon la revendication 1, caractérisée en ce que les appendices (11) sont déformés de manière élastique lors de l'insertion dans l'espace d'air (10) et en ce que les sections formant parois (5) exercent un poids vers l'extérieur.

3. Pièce détachée selon la revendication 2, caractérisée en ce que les appendices (11) sont amenés à partir d'un plan incliné (13) vers l'extérieur lors de l'insertion.

4. Pièce détachée selon la revendication 2, caractérisée en ce que les appendices (11) sont amenés vers l'intérieur et l'extérieur grâce aux élévations (15 et 14) de la paroi intérieure de la section formant paroi (5) et du bâti de la pièce détachée (9).

5. Pièce détachée selon la revendication 2, caractérisée en ce que les appendices (11) présentent des sections (16) élargies et fourchues, qui sont comprimées mutuellement lors de l'insertion.
